# EUROPEAN PATENT SPECIFICATION

(11) **EP 2 377 726 B1**
(45) Date of publication and mention of the grant of the patent: **04.12.2013**
(21) Application number: 11160427.8
(22) Date of filing: 30.03.2011
(51) Int. Cl.: B60R 1/076

(54) **Vehicle outside mirror device**
Fahrzeugaußenspiegelvorrichtung
Dispositif de rétroviseur extérieur de véhicule

(30) Priority: 15.04.2010 JP 2010094243
(43) Date of publication of application: 19.10.2011
(73) Proprietor: Ichikoh Industries, Ltd., Kanagawa-ken 259-1192 (JP)
(72) Inventor: Watanabe, Takashi, Isehara-shi Kanagawa 259-1192 (JP)
(74) Representative: Grünecker, Kinkeldey, Stockmair & Schwanhäusser

(56) References cited:
- EP-A1- 0 402 465
- EP-A1- 1 481 850
- EP-A1- 1 795 394
- EP-A1- 2 042 375
- JP-A- 2007 038 898
- US-A1- 2004 264 015

## Description

### BACKGROUND OF THE INVENTION

### 1. Field of the Invention

The present invention relates to a vehicle outside mirror device such as a door mirror, for example, which causes a mirror assembly to be rotatable relative to a vehicle body (such as a door, a fender, or a pillar, for example). In other words, the present invention relates to vehicle outside mirror devices of manually driven storage type and electrically driven storage type.

### 2. Description of the Related Art

A vehicle outside mirror device of such type is conventionally known (for example, Japanese Patent Application Laid-open No. 2007-38898). Hereinafter, a conventional vehicle outside mirror device will be described. In the conventional vehicle outside mirror device, a shaft is inserted through a support hole of a door mirror; a coil spring is externally inserted into the shaft in a compressed state; a spring stopper is engagingly locked with the shaft; and then, the door mirror is mounted on the shaft to be rotatable between predetermined locations by means of a spring force of a coil spring.
EP 2042375 A1 (closest prior art), discloses a vehicle mirror device comprising a base unit which is fixed to a door of the vehicle and a shaft which is fixed to the base unit. The vehicle mirror device further comprises a mirror assembly having an attachment member which is provided on the shaft so that the mirror assembly is rotatable. The attachment member is fixed to the shaft by means of a spring which is compressed by a stop which is engaged with the shaft via nails. At a top end of an inner peripheral surface of the stop, a plurality of retainers is integrally provided. The stop further comprises a cylindrical cover which is integrally provided on a bottom end of the stop so as to cover the entire spring. The retainers and the cover interact with the shaft, respectively, a cylindrical portion of a shaft base so that the stop is fixed without being deflected.

In the conventional vehicle outside mirror device, it is important that the spring stopper is securely attached to the shaft. In other words, if the spring stopper is not securely attached to the shaft, or alternatively, if the spring stopper is disengaged (removed) from the shaft, a predetermined spring force of the coil spring, stable rotation of the door mirror cannot be obtained, and it becomes difficult to cause the door mirror to be stably positioned in the predetermined location.

The present invention has been made in order to solve the above-described problem that it has been difficult to cause the spring stopper to securely mount on the shaft in the conventional vehicle outside mirror device.

### SUMMARY OF THE INVENTION

The aforesaid problem is solved by a vehicle outside mirror device having the features of claim 1.

A second aspect of the present invention is directed to the vehicle outside mirror device, wherein the opening preventing portion is integrally provided at the mirror assembly side.

A third aspect of the present invention is directed to the vehicle outside mirror device, wherein at the stop and the opening preventing portion, abutment faces which are adapted to abut against each other in the radial direction of the shaft are provided in an axial direction of the shaft, respectively.

A fourth aspect of the present invention is directed to the vehicle outside mirror device, wherein a stopper for stopping the stop from moving in the axial direction of the shaft is provided at the opening preventing portion.

The vehicle outside mirror device according to the first aspect of the present invention becomes capable of reliably preventing an elastic portion of a stop from opening from the inside to the outside in a radial direction of a shaft from an engagement portion of the shaft. In other words, a spring abutment portion of the stop, a spring force of a spring always acts as a force of moving the stop in an axial direction of the shaft and a force of opening the stop from the inside to the outside from an engagement portion of the shaft. In this manner, the vehicle outside mirror device according to the first aspect of the present invention becomes capable of reliably preventing the elastic engagement portion of the stop from opening from the inside to the outside in the radial direction of the shaft from the engagement portion of the shaft. As a result, the vehicle outside mirror device according to the first aspect of the present invention enables the stop to be securely mounted on the shaft by means of the opening preventing portion, so that: a predetermined spring force of the spring can be reliably obtained; stable rotation of a mirror assembly can be obtained; and the mirror assembly can be stably positioned in a predetermined location. In other words, stable rotation of the mirror assembly can be maintained and a stable stop location of the mirror assembly can be allocated.

Moreover, the vehicle outside mirror device according to the first aspect of the present invention becomes capable of reliably preventing the elastic engagement portion of the stop from opening from the inside to the outside in the radial direction of the shaft, by means of the opening preventing portion. Therefore, even if the stop and shaft is comprised of a synthetic resin member, this mirror device becomes capable of reliably preventing the elastic engagement portion of the stop from opening from the inside to the outside in the radial direction of the shaft. As a result, the vehicle outside mirror device according to the first aspect of the present invention enables the stop and the shaft to be comprised of a synthetic resin member, thus facilitating a manufacturing process in comparison with that for a metal member. Therefore, manufacturing cost can be reduced and weight reduction can be achieved.

In addition, the vehicle outside mirror device according to the second aspect of the present invention enables the opening preventing portion to be integrally provided on a mirror assembly side. Therefore, the number of parts can be reduced, and manufacturing cost can be reduced accordingly.

Further, in the vehicle outside mirror device according to the third aspect of the present invention, an abutment face of the stop and an abutment face of the opening preventing portion, a respective one of which is provided in the axial direction of the shaft, abut against each other in the radial direction of the shaft, thus preventing the stop from tilting relative to the shaft. As a result, the vehicle outside mirror device according to the third aspect of the present invention enables the stop to tilt relative to the shaft, further reliably preventing the elastic engagement portion of the stop from disengaging the inside to the outside in the radial direction of the shaft from the engagement portion of the shaft, thus enabling the stop to be further securely mounted on the shaft.

Furthermore, the vehicle outside mirror device according to the fourth aspect of the present invention becomes capable of stopping a stopper of the opening preventing the stop from moving in the axial direction of the shaft (i.e., in a direction in which the spring force of a spring acts and the stop is removed from the shaft). As a result, the vehicle outside mirror device according to the fourth aspect of the present invention becomes capable of further reliably preventing the stop from moving in the axial direction of the shaft and the elastic engagement portion of the stop from disengaging from the inside to the outside in the radial direction of the shaft from the engagement portion of the shaft.

### BRIEF DESCRIPTION OF THE DRAWINGS

FIG. 1 is a plan view of a use state showing a vehicle outside mirror device according to a first embodiment of the present invention;
FIG. 2 is an exploded perspective view showing an electrically driven storage unit, similarly;
FIG. 3 is a perspective view showing an electrically driven storage unit in a case where a gear case and a cover of a casing is partially cut out, similarly;
FIG. 4 is a longitudinal cross section (a vertical cross section) showing a part of the electrically driven storage unit, similarly;
FIG. 5 is a perspective view showing a state in which the stop is seen from an oblique top, similarly;
FIG. 6 is a perspective view showing a state in which the cover is seen from an oblique bottom, similarly;
FIG. 7 is a partially enlarged longitudinal cross section (a partially enlarged vertical cross section) showing a state before the stop is mounted on a shaft, similarly;
FIG. 8 is a partially enlarged longitudinal cross section (a partially enlarged vertical cross section) showing a state in which the stop is being mounted on the shaft partway, similarly;
FIG. 9 is a partially enlarged longitudinal cross section (a partially enlarged vertical cross section) showing a state in which the stop has been mounted on the shaft, similarly;
FIG. 10 is a partially enlarged longitudinal cross section (a partially enlarged vertical cross section) showing a state in which the stop has been mounted on the shaft and the cover has been engagingly fixed to the gear case, similarly;
FIG. 11 is a partially enlarged longitudinal cross section (a partially enlarged vertical cross section) of essential portions, the cross section showing a vehicle outside mirror device according to a second embodiment of the present invention; and
FIG. 12 is a longitudinal cross section (a vertical cross section) of essential portion, the cross section showing a vehicle outside mirror device according to a third embodiment of the present invention.

### DESCRIPTION OF THE PREFERRED EMBODIMENTS

Hereinafter, three of the exemplary embodiments of the present invention will be described in detail with reference to the drawings. It should be noted that the present invention is not limited by the exemplary embodiments.

### [First Embodiment]

### (Description of Configuration)

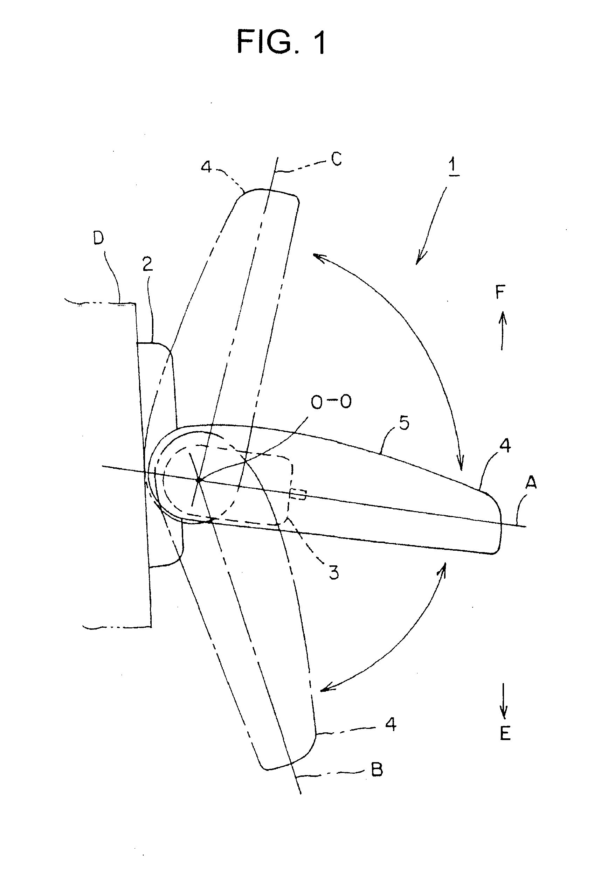

FIG. 1 to FIG. 10 show a vehicle outside mirror device according to a first embodiment of the present invention. Hereinafter, a configuration of the vehicle outside mirror device in the first embodiment will be described. In FIG. 1, reference numeral 1 designates the vehicle outside mirror device in the first embodiment and designates an electrically driven storage type door mirror device (an electrically storage type door mirror) in this example. The electrically driven storage type door mirror device 1 is equipped at a respective one of the left and right doors (not shown) of an automobile. The electrically driven storage type door mirror device 1 of the first embodiment is the one that is equipped at the right side door of the automobile and an electrically driven storage type door mirror equipped at the left side door of the vehicle is substantially reversed at the left and right from the electrically driven storage type door mirror device 1 of the first embodiment.

The electrically driven storage type door mirror 1, as shown in FIG. 1, is the one in which a mirror assembly 4 is rotatably mounted on a vehicle body (an automobile door) D via an electrically driven storage unit 3 and a base (a mirror base) 2. The base 2 is the one that is fixed to the door D.

The mirror assembly 4 is comprised of a mirror housing 5, a mount bracket (not shown), a power unit (not shown), and a mirror (a mirror unit), although not shown. The mount bracket is mounted in the mirror housing 5. The power unit is mounted on the mount bracket. The mirror is mounted on the power unit to be able to tilt vertically and horizontally.

The electrically driven storage unit 3 is the one that is provided with: a shaft holder 9; a shaft 10; a gear case 11 and a cover 12, a respective one of which serves as a casing; a motor 13; a deceleration mechanism 14 and a clutch mechanism 15, a respective one of which serves as a rotation force transmission mechanism; a bearing member 16; an interposing member 6; an electrically driven rotation range restricting mechanism; and a buffering mechanism.

The shaft holder 9 is fixed to the base 2. The shaft 10 is integrally provided at a center of one face (a top face) of the shaft holder 9. The shaft 10 is formed in a hollow shape, and is configured so that a harness (not shown) is inserted through the shaft. On the shaft 10, the gear case 11 and the cover 12 are rotatably mounted around a rotational center O-O of the shaft 10. On the gear case 11, the mount bracket of the mirror assembly 4 is mounted. In the gear case 11 and the cover 12, there are stored: the motor 13; the deceleration mechanism 14 and the clutch mechanism 15, a respective one of which serves as the rotation force transmission mechanism; the bearing member 16; the interposing member 6; the electrically driven rotation range restricting mechanism; and the buffering mechanism, respectively.

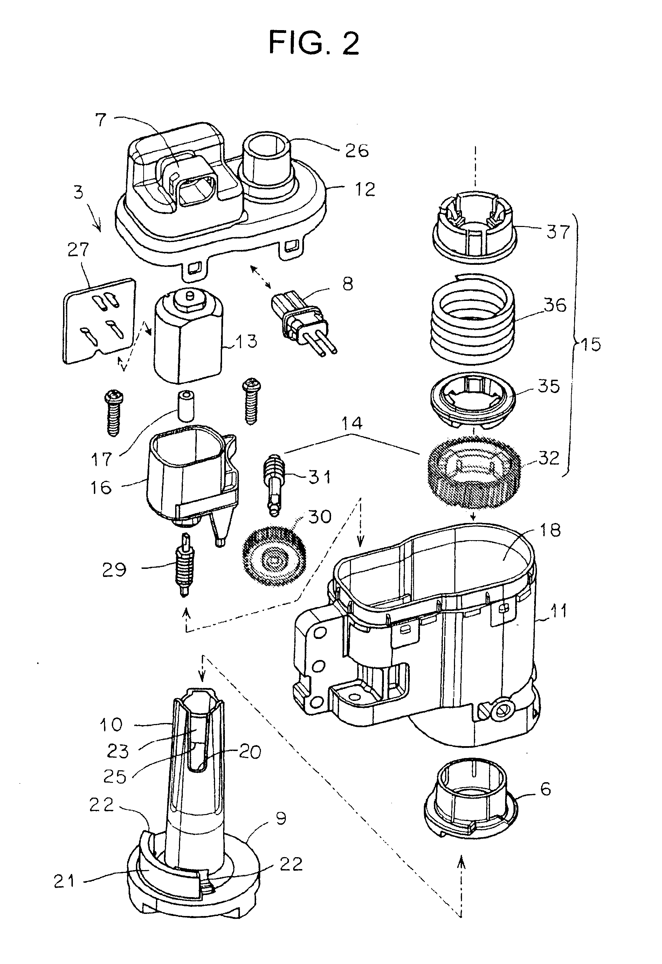

The gear case 11, as shown in FIG. 2, FIG. 3, and FIG. 4, is formed in a sectional recessed shape of which one side (a bottom side) closes and the other side (a top side) opens. In other words, a housing portion 18 formed in a sectional recessed shape which is closed at the shaft holder 9 side and is opened at the cover 12 side is provided in the gear case 11. At a closed potion of the gear case 11, an insert hole 19 is provided. The shaft 10 is inserted into the insert hole 19. In other words, the gear case 11 externally engages (engages from the outside) with the shaft 10 via the insert hole 19. As a result, the gear case 11 is mounted on the shaft 10 to be rotatable around the rotational center O-O of the shaft 10.

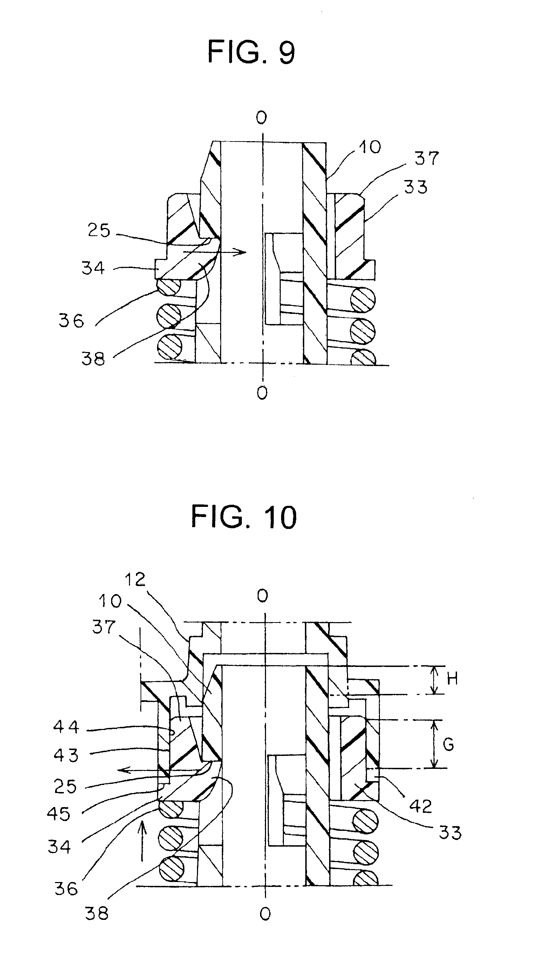

As shown in FIG 2 to FIG. 4, a stopper protrusive portion 21 formed in an arc shape around the rotational center O-O of the shaft 10 is integrally provided on a top face of the shaft holder 9. Stopper faces 22 are provided on both end faces of the stopper protrusive portion 21, respectively. On the other hand, as shown in FIG. 9 and FIG. 10, a guide groove 24 formed in an arc shape around the rotational center O-O of the shaft 10 is provided on a bottom face of the gear case 11. Stopper faces (not shown) are provided on both end faces of the guide groove 24, respectively.

The stopper protrusive portion 21 of the shaft holder 9 is engaged with the guide groove 24 of the gear case 11. The stopper protrusive portion 21 and the guide groove 24 configure a guide member which serves as a guide when the gear case 11 rotates relative to the shaft holder 9 around the rotational center O-O of the shaft 10, i.e., as shown in FIG. 1, when the mirror assembly 4 rotates backward (in the clockwise direction) or forward (in the counterclockwise direction) between a use location A and a storage location B and between the use location A and a forward tilt location C relative to the base 2. In FIG. 1, reference uppercase letter E designates a backward side of a vehicle and reference uppercase letter F designates a forward side of the vehicle.

In addition, the stopper face 22 of the stopper protrusive portion 21 and the stopper face of the guide groove 24 configure a stopper member which serves as a stopper for avoiding the mirror assembly 4 from abutting against the door D by rotation of the mirror assembly 4 being restricted due to the stopper face 22 of the stopper protrusive portion 21 and the stopper face of the guide groove 24 abutting against each other before the mirror assembly 4 rotates in the clockwise direction or counterclockwise direction and then abuts against the door D.

The cover 12, as shown in FIG. 2 to FIG. 4, FIG. 6, and FIG. 10, is formed in a sectional inverted recessed shape of which one side (an upper side) closes and the other wise (a lower side) opens. In other words, a housing portion 18 formed in a sectional inverted recessed shape which is opened at one side, i.e., at the gear case 11 side and is opened at the other side is provided on the cover 12. A harness insert cylinder portion 26, which communicates with the shaft 10 formed in a hollow shape, is integrally provided at the cover 12.

In addition, a socket portion 7 is provided at the cover 12. At the socket portion 7, a connector 8 which is electrically connected to a power source (battery) side, although not shown, is connected in an electrically intermittent manner and is mounted in a mechanically removable manner. A board 27 is mounted on the socket portion 7. The board 27 is electrically connected to the motor 13. A switch circuit for controlling driving and stoppage of the motor 13 is packaged on the board 27. As a result, the motor 13 is electrically connected to the connector 8 via the board 27 and the socket portion 7.

The cover 12 is engagingly fixed to an outside of an opening edge of the housing portion 18 in the gear case 11. In the housing portion 18 inside of the gear case 11 and the cover 12, the motor 13, the deceleration mechanism 14, the clutch mechanism 15, the bearing member 16, the interposing member 6, the electrically driven rotation range restricting mechanism, the buffering mechanism, and the board 27 are fixedly housed by means of screws or the like.

In addition, at the cover 12, an insert hole 39 is provided so as to communicate with the harness insert cylinder portion 26. One end part (an upper end part) of the shaft 10 is inserted into the insert hole 39. In other words, the cover 12 externally engages (engages from the outside) with the shaft 10 via the insert hole 39. As a result, the cover 12 is rotatably mounted on the shaft 10 together with the gear case 11 so as to be rotatable around the rotational center O-O of the shaft 10.

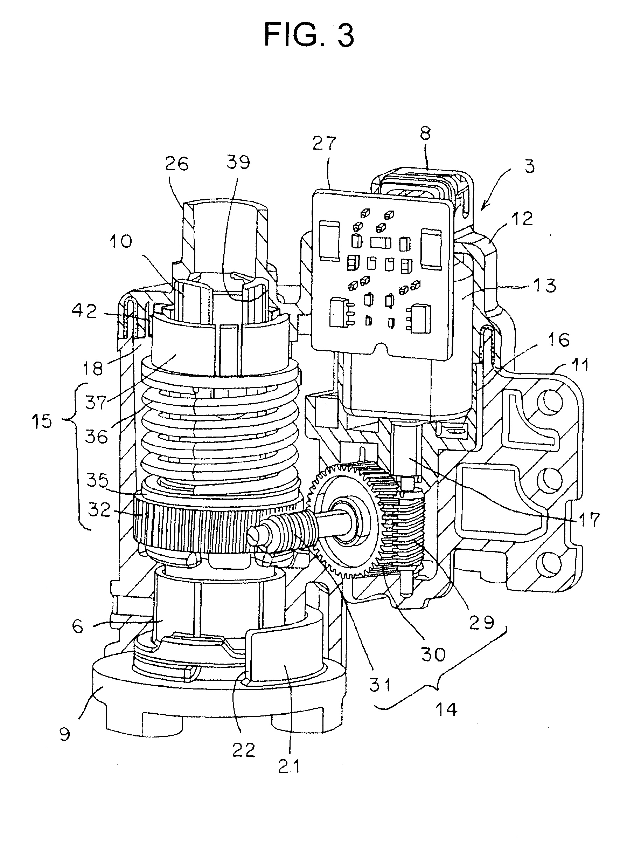

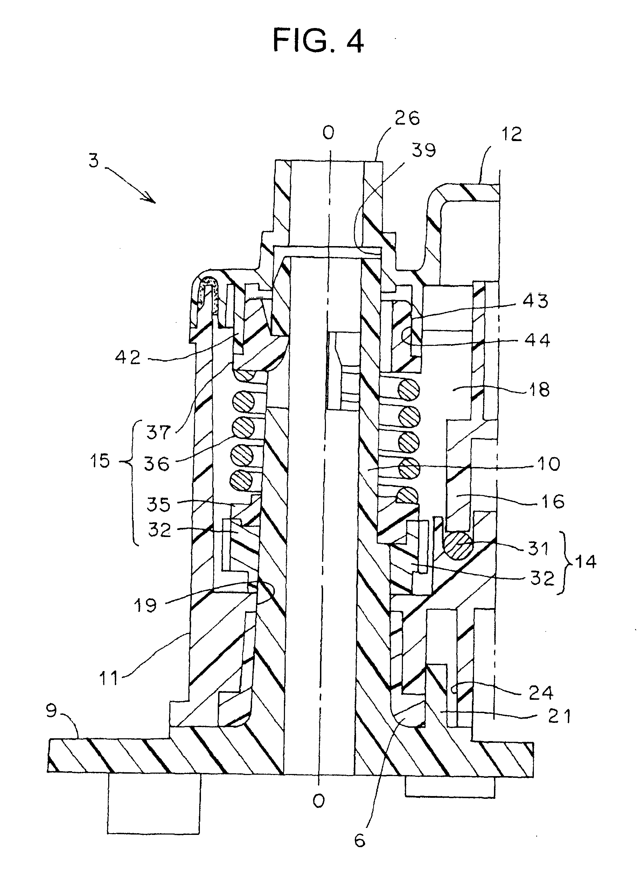

Further, an inner circumferential face of the insert hole 39 of the cover 12 and an outer circumferential face of the shaft 10, as shown in FIG. 3 and FIG. 4, abut against each other in a radial direction of the shaft 10. Moreover, the inner circumferential face of the insert hole 39 of the cover 12 and the outer circumferential face of the shaft 10 have predetermined dimensions in an axial direction of the shaft 10. As a result, the cover 12 and the gear case 11 (a casing) becomes rotatable around the rotational center O-O of the shaft 10 without tilting relative to the shaft 10.

The deceleration mechanism 14 and the clutch mechanism 15, a respective one of which serves as the rotation force transmission mechanism, as shown in FIG. 2 to FIG. 4, are the ones that: are housed in the housing portion 18 of the gear case 11 and the cover 12; are provided between an output shaft (not shown) of the motor 13 and the shaft 10; and are adapted to transmit a rotation force of the motor 13 to the shaft 10. The motor 13, and the deceleration mechanism 14 and the clutch mechanism 15, a respective one of which serves as the rotation force transmission mechanism, are the ones that cause the mirror assembly 4 to be electrically driven to rotate around the rotational center O-O of the shaft 10 relative to the shaft 10.

The deceleration mechanism 14 is comprised of: a first worm gear 29 which serves as a first step gear; a helical gear 30 which serves as a second step gear engaging with the first worm gear 29; a second worm gear 31 which serves as a third step gear; and a clutch gear 32 which serves as a final step gear with which the second worm gear 31 engages.

The first worm gear 29 is rotatably borne on the gear case 11 and the bearing member 16. The first worm gear 29 is coupled with an output shaft of the motor 13 via a joint 17. The helical gear 30 is rotatably borne on the bearing member 16. The second worm gear 31 is rotatably borne on the gear case 11 and the bearing member 16. The helical gear 30 and the second worm gear 31 are integrally rotatably coupled with each other.

The clutch mechanism 15 is provided with the clutch gear 32, a clutch holder 35, a spring 36, and a push nut 37 which serves as a stop. The clutch mechanism 15 is configured by sequentially engaging the clutch gear 32, the clutch holder 35, and the spring 36 with the shaft 10, locking the push nut 37 with the shaft 10, and then, establishing the spring 36 in a compressed state. The clutch gear 32 and the clutch holder 35 are coupled with each other in an intermittent manner. The second worm gear 31 of the deceleration mechanism 14 and the clutch gear 32 of the clutch mechanism 15 are adapted to engage with each other, whereby a rotation force of the motor 13 is transmitted to the shaft 10.

The clutch gear 32 and the clutch holder 35 configure the clutch mechanism 15. The clutch gear 32 is mounted on the shaft 10 so as to be rotatable around the rotational center O-O of the shaft 10 and so as to be movable in an axial direction. The clutch holder 35 is mounted on the shaft 10 in an engaged state so as to disable rotation and so as to be movable in the axial direction. On faces which are opposite to each other between the clutch gear 32 and the clutch holder 35, i.e., on one face (a top face) side of the clutch gear 32 and one face (a bottom face) side of the clutch holder 35, a plurality of, in this example, three mountain-shaped clutch protrusive portion and three valley-shaped clutch recessed portions are provided at equal intervals. When the clutch protrusive portion and the clutch recessed portion engage with each other, the clutch gear 32 and the clutch holder 35 are established in a continuous state (in an engaged state or in a connected state), or alternatively, when the clutch protrusive portion and the clutch recessed portion are established in a disengaged state, the clutch gear 32 and the clutch holder 35 are established in a discontinuous state (in a disengaged state or in a disconnected state). The clutch mechanism 15 is disallowed to be disengaged therefrom with an electrically driven rotation force of the motor 13 and the rotation force transmission mechanism (the deceleration mechanism 14 and the clutch mechanism 15), or alternatively, the clutch mechanism are disengaged therefrom with a force which is equal to or greater than the electrically driven rotation force so as to cause the mirror assembly 4 to be rotatable relative to the shaft 10.

In the clutch member, the other side (a bottom face) side of the clutch gear 32 abuts against one face (a top face) of a bottom part in the gear case 11 directly or via a washer (not shown). On the other hand, in the clutch member, the other face (a top face) side of the clutch holder 35 directly abuts against the spring 36.

The interposing member 6 is provided between the shaft holder 9 and the gear case 11. The interposing member 6 is composed of an inexpensive resin member with its low friction and frictional wear proof property, for example, a POM (polyacetal or an acetal resin) or a PPS (polyphenylene sulfide). The interposing member 6 is formed in a hollow-like, cylindrical shape having an insert hole through which the shaft 10 is inserted, the cylindrical shape having a jaw portion at one end part (a lower end part). The interposing member 6 is rotatably mounted on the shaft 10 around the rotational center O-O of the shaft 10. An arc protrusive portion around the rotational center O-O of the shaft 10 is integrally provided on one face (a bottom face) at the jaw portion of the interposing member 6. Abutment faces of the electrically driven rotation range restricting member are provided on both end faces of the arc protrusive portion, respectively. In addition, on the other face (a top face) at the jaw portion of the interposing member 6, a plurality of, in this example, two trapezoidal engagement protrusive portions, a respective one of which serves as an engagement portion of the buffering mechanism, are integrally provided on a circumference around the rotational center O-O of the shaft 10.

The shaft holder 9 and the shaft 10 are comprised of a member with its high rigidity, for example, a die cast or a resin. On a top face of the shaft holder 9, an arc protrusive portion around the rotational center O-O of the shaft 10 is integrally provided in correspondence with the arc protrusive portion of the interposing member 6. On both end faces of the arc protrusive portion, abutment faces of the electrically driven rotation range restricting mechanism are provided in correspondence with the abutment faces of the interposing member 6, respectively.

The gear case 11 is comprised of a member with its high rigidity, for example, a resin containing nylon or a glass fiber. On the other face (a bottom face) of a bottom part of the gear case 11, a trapezoidal engagement recessed portion that serves as an engagement portion of the buffering mechanism is integrally provided in correspondence with a respective one of a plurality of, in this example, the two engagement protrusive portions of the interposing member 6 at equal intervals on a circumference around the rotational center O-O of the shaft 10.

The electrically driven rotation range restricting mechanism is a mechanism for restricting a range of the electrically driven rotation of a mirror assembly. In other words, the rotationally driven range restricting mechanism is comprised of the abutment faces that are provided at the interposing member 6 and the shaft holder 9, and is a mechanism in which the abutment face of the interposing member 6 and the abutment face of the shaft holder 9 abut against each other, whereby the interposing member 6 is fixed to the shaft holder 9 and then the electrically driven rotation range of the mirror assembly 4 is restricted. The electrically driven rotation range, as shown in FIG. 1, is a range between a use location A and a storage location B. As a result, when one abutment face of the interposing member 6 and one abutment face of the shaft holder 9 abut against each other, the mirror assembly 4 is positioned in the use location A. In addition, when the other abutment face of the interposing member 6 and the other abutment face of the shaft holder 9 abut against each other, the mirror assembly 4 is positioned in the storage location B.

The buffering mechanism is a mechanism for rotating the mirror assembly 4 for the sake of buffering. In other words, the buffering mechanism is comprised of an engagement protrusive portion and an engagement recessed portion which are provided at the interposing member 6 and the gear case 11, and is a mechanism in which: the engagement protrusive portion of the interposing member 6 and the engagement recessed portion of the gear case 11 are disallowed to disengage from each other; in the electrically driven rotation range (in a range between a use location A and a storage location B), with an electrically driven rotation force, the interposing member 6 and the gear case 11 rotate together around the rotational center O-O of the shaft 10 relative to the shaft 10 and the shaft holder 9, and with a force which is equal to or greater than the electrically driven force, the engagement recessed portion of the interposing member 6 and the engagement recessed portion of the gear case 11 disengage from each other; the clutch mechanism 15 further disengages therefrom (a clutch protrusive portion of the clutch gear 32 and a clutch recessed portion of the clutch holder 35 is disengaged from each other); and the gear case 11 rotates around the rotational center O-O of the shaft 10 relative to the shaft 10 and the shaft holder 9.

An outer circumferential face of the shaft 10 is formed in a tapered shape so that an external diameter gradually increases from an upper end to a lower end. As a result, the shaft 10 is configured so that a molding die can be easily removed in the case where the shaft is made of a resin. At the shaft 10, a plurality of, in this example, three grooves 20 are provided at equal intervals between an upper end and a substantially middle part. The groove 20 is formed in a penetrative shape other than its upper end part, and on the other hand, the groove is formed in a coupled shape (or in a bridged shape) at an upper end part of the shaft 10. Three engagement portions 25 are provided, respectively, at a stepped portion on a boundary between a coupling portion 23 and a penetrative portion of the three grooves 20 at an upper end part of the shaft 10. In addition, a tilt face 28 is provided at one end (an upper end) of the coupling portion 23 of the three grooves 20 at the upper end part of the shaft 10.

The push nut 37 that serves as a stop is comprised of an inexpensive resin member with its low friction and frictional wear proof property, for example, a POM (polyacetal or acetal resin) or a PPS (polyphenylene sulfide). As shown in FIG. 2 to FIG. 5 and FIG. 7 to FIG. 10, an insert portion 33, a spring abutment portion 34, and three elastic engagement portions 38 are integrally provided at the push nut 37.

The insert portion 33 is formed in a cylindrical shape around the rotational center O-O of the shaft 10, and the spring abutment portion 34 is formed in the shape of a circular ring around the rotational center of O-O of the shaft 10. The insert portion 33 and the spring abutment portion 34 each have an insert hole 40 through which the shaft 10 is inserted.

The spring abutment portion 34 is integrally provided in a jaw shape at one end (a lower end) of the insert portion 33. One end (an upper end) of the spring 36 elastically abuts against one face (a bottom face) of the spring abutment portion 34.

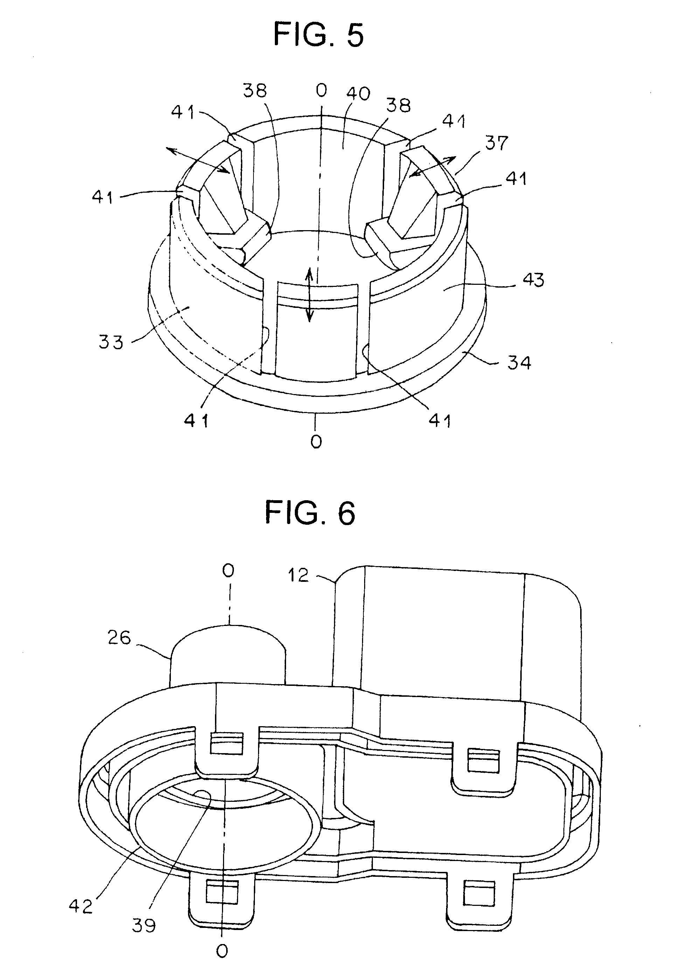

At the insert portion 33, a total of three pairs of cutting grooves 41 are provided in an axial direction of the shaft 10 in a range from the other end (an upper end) of the insert portion 33 to the spring abutment portion 34. In the insert portion 33, the elastic engagement portion 38 is provided on an inner circumferential face between the two cutting grooves 41. The elastic engagement portion 38 is the one that: has a predetermined elasticity in a radial direction of the shaft 10 (in the direction indicated by the solid arrow in FIG. 5); elastically returns from the outside to the inside in the radial direction of the shaft 10; and then, elastically engages with the engagement portion 25 of the shaft 10.

The cover 12, like the gear case 11, is comprised of a member with its high rigidity, for example, a resin containing nylon or glass fiber. An opening preventing portion 42 is integrally provided at the cover 12. The opening preventing portion 42 is formed in a cylindrical shape around the rotational center O-O of the shaft 10 and is provided so as to communicate with the harness insert cylinder portion 26 and the insert hole 39. The opening preventing portion 42 is the one that prevents the elastic engagement portion 38 of the push nut 37 from opening from the inside to the outside in the radial direction of the shaft 10.

At the push nut 37 and the opening preventing portion 42, abutment faces 43, 44 which are adapted to abut against each other in the radial direction of the shaft 10 are provided, respectively, in the axial direction of the shaft 10. In other words, the abutment face 43 of the push nut 37 is provided on an outer circumferential face of the insert portion 33. On the other hand, the abutment face 44 of the opening preventing portion 42 is provided on an inner circumferential face of the opening preventing portion 42.

A stopper 45 is integrally provided at one end part (a lower end part) of the opening preventing portion 42. The stopper 45 is the one that abuts against the other face (a top face) of the spring abutment portion 34 of the push nut 37 to thereby stop the push nut 37 from moving in an axial direction of the shaft 10, in other words, in the direction in which a spring force of the spring 36 acts and in the direction in which the push nut 37 is removed from the shaft 10 (in the direction indicated by the solid arrow in FIG. 10).

### (Description of Assembling Push Nut with Shaft)

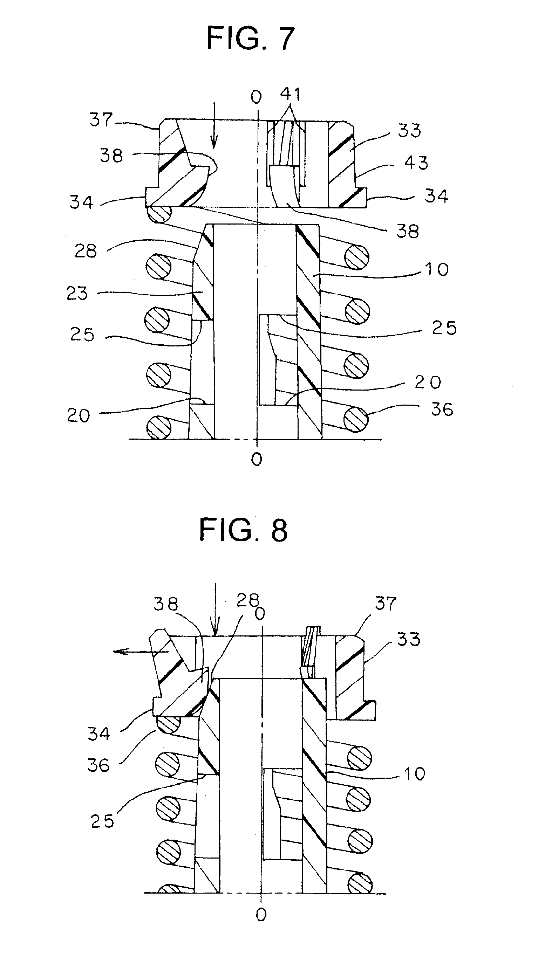

First, the clutch gear 32, the clutch holder 35, and the spring 36 are sequentially engaged with the shaft 10. Next, using a jig (not shown), the push nut 37 is pushed into the shaft 10 against the spring force of the spring 36 from the top to the bottom in the direction indicated by the solid arrow in FIG. 7 and FIG. 8.

Then, the elastic engagement portion 38 of the push nut 37 elastically deforms and opens from the inside to the outside in the radial direction of the shaft 10 in the direction indicated by the solid arrow in FIG. 8, along the tilt face 28 of the shaft 10.

Further, at a time point when the push nut 37 has been pushed into the shaft 10 and then the elastic engagement portion 38 of the push nut 37 has reached the engagement portion 25 of the shaft 10, the elastic engagement portion 38 of the push nut 37 elastically engages from the outside to the inside in the radial direction of the shaft 10 in the direction indicated by the solid arrow in FIG. 9 and then elastically engages with the engagement portion 25 of the shaft 10. In this manner, assembling the push nut 37 with the shaft 10 completes.

The cover 12 is then engagingly fixed to the gear case 11. At this time, as shown in FIG. 3, FIG. 4, and FIG. 10, the opening preventing portion 42 of the cover 12 engages from the outside with the insert portion 33 of the push nut 37. As a result, the abutment face 44 on an inner circumferential face of the opening preventing portion 42 of the cover 12 and the abutment face 43 on an outer circumferential face of the insert portion 33 of the push nut 37 abut against each other in the radial direction of the shaft 10.

### (Description of Functions)

The electrically driven storage type door mirror device 1 in the first embodiment is made of the constituent elements described above. Hereinafter, functions of the door mirror device will be described.

A description will be given with respect to a case in which a mirror assembly 4 which is positioned in a use location A is electrically driven to be rotated and stored in a storage location B, as shown in FIG. 1. When the mirror assembly 4 is positioned in the use location A (in a set state or in a use state), a clutch mechanism 15 is established in a state in which a clutch protrusive portion of a clutch gear 32 and a clutch recessed portion of a clutch holder 35 engage with each other, so that the clutch gear 32 and the clutch holder 35 are established in a continuous state. Therefore, the clutch gear 32 is established in a rotation disable state relative to the shaft 10, together with the clutch holder 35.

In this set state (the use state), a switch (not shown) in an automobile room is operated, whereby power is fed to a motor 13 via a connector 8, a socket portion 7, and a board 27 and then the motor 13 is driven. A rotation force of the motor 13 is then transmitted to the clutch gear 32 that is fixed to the shaft 10 via an output shaft and a deceleration mechanism 14. At this time, the clutch gear 32 is established in a rotation disable state relative to the shaft 10, together with the clutch holder 35, so that a second worm gear 31 of the deceleration mechanism 14 rotates around the rotational center O-O of the shaft 10 while the clutch gear 32 is employed as a fixing gear. By means of this rotation, a mirror assembly 4 having an electrically driven storage unit 3 incorporated therein, as shown in FIG. 1, rotates in the clockwise direction from the use location A to the storage location B around a rotational center O-O of the shaft 10.

When the mirror assembly 4 is positioned in the storage location B, a value of a current (an actuation current) which is supplied to the motor 13 increases and reaches a predetermined value, a switch circuit of the board 27 is actuated and then current supply to the motor 13 is interrupted. As a result, the mirror assembly 4 stops and is positioned in the storage location B that serves as a predetermined location shown in FIG. 1.

Next, a description will be given with respect to a case in which a mirror assembly 4 which is positioned in a storage location B is electrically driven to be rotated and returned to a use location A, as shown in FIG. 1. When the mirror assembly 4 is established in a state in which it is positioned in a storage location B (a storage state), a clutch 15 is established in a connected state as in a set state, so that a clutch gear 32 is established in a rotation disable state relative to a shaft 10, together with a clutch holder 35.

In this storage state, a switch (not shown) in an automobile room is operated, whereby a motor 13 is driven. A rotation force of the motor 13 is then transmitted to the clutch gear 32 that is established in a rotation disable state, via a deceleration mechanism 14. In this manner, the mirror assembly 4 having an electrically driven storage unit 3 incorporated therein, as shown in FIG. 1, rotates in the counterclockwise direction from the storage location B to the use location A around a rotational center O-O of a shaft 10.

When the mirror assembly 4 is positioned in the use location A, a value of a current (an actuation current) which is supplied to the motor 13 increases and reaches a predetermined value, a switch circuit of a board 27 is actuated, and then, current supply to the motor 13 is interrupted. As a result, the mirror assembly 4 stops and is positioned in the use location A that serves as a predetermined location shown in FIG. 1.

Further, a description will be given with respect to a case in which a mirror assembly 4 which is positioned in a use location A is caused to tilt in a forward tilt location C for the sake of buffering, as shown in FIG. 1. When the mirror assembly 4 is established in a state it is positioned in the use location A (in a set state or in a use state), a clutch mechanism 15 is established in a connected state, so that a clutch gear 32 is established in a rotation disable state relative to a shaft 10, together with a clutch holder 35.

In this set state (the use state), a force in the counterclockwise direction, the force being greater than an electrically driven rotation force by means of the motor 13 and the deceleration mechanism 14 (a manually driven force exerted when something abuts against the mirror assembly 4) is applied to the mirror assembly 4 that is positioned in the use location A. Then, a gear case 11 which is mounted on the mirror assembly 4 is about to rotate in the counterclockwise direction. At this time, an interposing member 6 is fixed to a shaft holder 9 and cannot rotate in the counterclockwise direction.

Therefore, an engagement protrusive portion of the interposing member 6 and an engagement recessed portion of the gear case 11 first disengage from each other. At this time, the gear case 11 (including a cover 12, a motor 13, a deceleration mechanism 14, a bearing member 16, a clutch gear 32, and a clutch holder 35) moves (rises) against a spring force of a spring 36.

Afterwards, the gear case 11 is further about to rotate in the counterclockwise direction. Then, a backlash between the clutch gear 32 and a second worm gear 31 is clogged, a gap in a thrust direction of the second worm gear 31 is clogged, and then, an engagement gap between the shaft 10 and the clutch holder 35 is clogged.

The clutch holder 35 is engaged with the shaft 10 in a rotation disable manner, so that a clutch protrusive portion of the clutch gear 32 at the gear case 11 side runs on a clutch recessed portion of the gear holder 35 at the fixing side of the shaft 10 and then the clutch protrusive portion of the clutch gear 32 and the clutch recessed portion of the clutch holder 35 disengage from each other. At this time, the clutch holder 35 moves (rises) against the spring force of the spring 36.

As a result, the gear case 11 (including the cover 12, the motor 13, the deceleration mechanism 14, the bearing member 16, and the clutch gear 32) rotates in the counterclockwise direction. In this manner, as shown in FIG. 1, the mirror assembly 4 rotates in the counterclockwise direction from the use location A to the forward tilt location C and then is positioned in the forward tilt location C at a time point when one stopper face 22 of the stopper protrusive portion 21 of the shaft holder 9 has abutted against one stopper face of a guide groove 24 of the gear case 11.

Then, as shown in FIG. 1, the mirror assembly 4 that is positioned in the forward tilt location C is caused to rotate in the clockwise direction with a force which is greater than an electrically driven rotation force. Subsequently, the gear case 11 (including the cover 12, the motor 13, the deceleration mechanism 14, the bearing member 16, and the clutch gear 32) that is mounted on the mirror assembly 4 rotates in the clockwise direction, so that as shown in FIG. 1, the mirror assembly 4 rotates in the clockwise direction from the forward tilt location C to the use location A.

Afterwards, the clutch protrusive portion of the clutch gear 32 and the clutch recessed portion of the clutch holder 35 first engage from each other and then the clutch mechanism 15 is established in a connected state. Subsequently, an engagement protrusive portion of the interposing member 6 and an engagement recessed portion of the gear case 11 engage with each other and then the interposing member 6 and the gear case 11 are established in an integrated state. As a result, as shown in FIG. 1, the mirror assembly 4 is positioned in the use location A.

Further, a description will be given with respect to a case in which a mirror assembly 4 that is positioned in a use location A is caused to tilt in a storage location B for the sake of buffering, as shown in FIG. 1. When the mirror assembly 4 is established in a state in which it is positioned in the use location A (in a set state or use state), a clutch mechanism 15 is established in a connected state, so that a clutch gear 32 is established in a rotation disable state relative to a shaft 10, together with a clutch holder 35.

In this set state (a use state), a force in the clockwise direction, the force being greater than an electrically driven rotation force (a manually driven force and a force exerted when something abuts against the mirror assembly 4), is applied to the mirror assembly 4 that is positioned in the use location A. Subsequently, the gear case 11 that is mounted on the mirror assembly 4 is about to rotate in the clockwise direction. At this time, an interposing member is fixed to a shaft holder and cannot rotate in the clockwise direction.

Therefore, an engagement protrusive portion of an interposing member 6 and an engagement recessed portion of the gear case 11 first disengage from each other. At this time, the gear case 11 (including the cover 12, the motor 13, the deceleration mechanism 14, the bearing member 16, the clutch gear 32, and the clutch holder 35) moves (rises) against the spring force of the spring 36.

Afterwards, the gear case 11 is further about to rotate in the clockwise direction. Subsequently, a backlash between the clutch gear 32 and a second worm gear 31 is clogged, a gap in a thrust direction of the second worm gear 32 is clogged, and then, an engagement gap between the shaft 10 and the clutch holder 35 is clogged.

The clutch holder 35 is engaged with the shaft 10 in a rotation disable manner, so that: a clutch protrusive portion of the clutch gear 32 at the gear case 11 side runs on a clutch recessed portion of the gear holder 35 at the fixing side of the shaft 10; and then, the clutch protrusive portion of the clutch gear 32 and the clutch recessed portion of the clutch holder 35 disengage from each other. At this time, the clutch holder 35 moves (rises) against the spring force of the spring 36.

As a result, the gear case 11 (including the cover 12, the motor 13, the deceleration mechanism 14, the bearing member 16, and the clutch gear 32) rotates in the clockwise direction. In this manner, as shown in FIG. 1, the mirror assembly 4 rotates in the clockwise direction from the use location A to the storage location B and then is positioned in the storage location B at a time point when the other stopper face 22 of the stopper protrusive portion 21 of the shaft holder 9 has abutted against the other stopper face of the guide groove 24 of the gear case 11.

Then, as shown in FIG. 1, the mirror assembly 4 that is positioned in the storage location B is caused to rotate in the counterclockwise direction with a force which is greater than an electrically driven rotation force. Subsequently, the gear case 11 (including the cover 12, the motor 13, the deceleration mechanism 14, the bearing member 16, and the clutch gear 32) that is mounted on the mirror assembly 4 rotates in the clockwise direction, so that as shown in FIG. 1, the mirror assembly 4 rotates in the counterclockwise direction from the storage location B to the use location A.

Afterwards, the clutch protrusive portion of the clutch gear 32 and the clutch recessed portion of the clutch holder 35 first engage with each other and then the clutch mechanism 15 is established in a connected state. Then, the engagement protrusive portion of the interposing member 6 and the engagement recessed portion of the gear case 11 engage with each other and then the interposing member 6 and the gear case 11 are established in an integrated state. As a result, as shown in FIG. 1, the mirror assembly 4 is positioned in the use location A.

### (Description of Advantageous Effects)

The electrically driven storage type door mirror device 1 in the first embodiment is made of the constituent elements and functions described above. Hereinafter, advantageous effects of the mirror device will be described.

The electrically driven storage type door mirror device 1 in the first embodiment becomes capable of reliably preventing an elastic engagement portion 38 of a push nut 37 from opening from the inside to the outside in a radial direction of a shaft 10 in the direction indicated by the solid arrow in FIG. 10 from an engagement portion 25 of the shaft 10, by means of an opening preventing portion 42. In other words, on a spring abutment portion 34 of a push nut 37, the spring force of a spring 36 always acts as a force of moving the push nut 37 from the top to the bottom in an axial direction of the shaft 10 in the direction indicated by the solid arrow in FIG. 10 and a force of opening the elastic engagement portion 38 of the push nut 37 from the inside to the outside in the radial direction of the shaft 10 in the direction indicated by the solid arrow in FIG. 10 from the engagement portion 25 of the shaft 10. In this manner, the electrically driven storage type door mirror 1 in the first embodiment enables the opening preventing portion 42 to reliably prevent the elastic engagement portion 38 of the push nut 37 from opening from the inside to the outside in the radial direction of the shaft 10 in the direction indicated by the solid arrow in FIG. 10 from the engagement portion 25 of the shaft 10, by means of the spring force of the spring 36 always acting thereon. As a result, the electrically driven storage type door mirror device 1 in the first embodiment enables the push nut 37 to be securely attached to the shaft 10 by means of the opening preventing portion 42, so that: a predetermined spring force of the spring 36 can be reliably obtained; stable rotation of the mirror assembly 4 can be reliably obtained; and the mirror assembly 4 can be reliably stably positioned in a predetermined location, i.e., the use location A or the storage location B. In other words, stable rotation of the mirror assembly 4 can be maintained and a stable stop location of the mirror assembly 4 can be allocated.

Moreover, the electrically driven storage type door mirror device 1 in the first embodiment becomes capable of reliably preventing he elastic engagement portion 38 of the push nut 37 from opening from the inside to the outside in the radial direction of the shaft 10 from the engagement portion 25 of the shaft 10, by means of the opening preventing portion 42. Therefore, even if the push nut 37 and the shaft 10 are comprised of a synthetic resin member, the door mirror device becomes capable of reliably preventing the elastic engagement portion 38 of the push nut 37 from opening from the inside to the outside in the radial direction of the shaft 10 from the engagement portion 25 of the shaft 10. As a result, according to the electrically driven storage type door mirror device 1 in the first embodiment, the push nut 37 and the shaft 10 can be comprised of a synthetic resin member, thus facilitating a manufacturing process in comparison with that for a metal member. Therefore, manufacturing cost can be reduced and weight reduction can be achieved.

In addition, according to the electrically driven storage type door mirror device 1 in the first embodiment, the opening preventing portion 42 is integrally provided at the cover 12 at the mirror assembly 4 side, so that the number of parts can be reduced, and manufacturing cost can be reduced accordingly. In particular, according to the electrically driven storage type door mirror device 1 in the first embodiment, the opening preventing portion 42 is formed in a cylindrical shape around a rotational center O-O of the shaft 10 and is provided so as to communicate with the harness insert cylinder portion 26 and the insert hole 39, so that a structure of a molding die of the cover 12 is simplified and manufacturing cost of the cover 12 can be reduced.

Further, according to the electrically driven storage type door mirror device 1 in the first embodiment, the abutment face 43 that serves as an outer circumferential face of the insert portion 33 of the push nut 37 and the abutment face 44 that serves as an inner circumferential face of the opening preventing portion 42, a respective one of which is provided in an axial direction of the shaft 10, abut against each other in a radial direction of the shaft 10, thus making it possible to prevent the push nut 37 from tilting relative to the shaft 10. As a result, according to the electrically driven storage type door mirror device 1 in the first embodiment, the push nut 37 tilts relative to the shaft 10, making it possible to further reliably prevent the elastic engagement portion 38 of the push nut 37 from disengaging from the inside to the outside in the radial direction of the shaft 10 from the engagement portion 25 of the shaft 10, thus enabling the push nut 37 to be further securely attached to the shaft 10.

Furthermore, according to the electrically driven storage type door mirror device 1 in the first embodiment, the stopper 45 of the opening preventing portion 42 becomes capable of stopping the push nut 37 from moving in the axial direction of the shaft 10 (in other words, in the direction in which the spring force of the spring 36 acts and in the direction in which the push nut 37 moves from the top to the bottom in the axial direction of the shaft 10 in the direction indicated by the solid arrow in FIG. 10 and then the push nut 37 is removed from the shaft 10). As a result, the electrically driven storage type door mirror device 1 in the first embodiment becomes capable of further reliably preventing the push nut 37 from moving in the axial direction of the shaft 10 and the elastic engagement portion 38 of the push nut 37 from disengaging from the inside to the outside in the radial direction of the shaft 10 from the engagement portion 25 of the shaft 10, thus enabling the push nut 37 to be further securely attached to the shaft 10.

Still furthermore, according to the electrically driven storage type door mirror device 1 in the first embodiment, the inner circumferential face of the insert hole 39 of the cover 12 and the outer circumferential face of the shaft 10 abut against each other in the radial direction of the shaft 10, and moreover, the inner circumferential face of the insert hole 39 of the cover 12 and the outer circumferential face of the shaft 10 have predetermined dimensions in the axial direction of the shaft 10. As a result, according to the electrically driven storage type door mirror device 1 in the first embodiment, the cover 12 and the gear case 11 (a casing) are rotatable around the rotational center O-O of the shaft 10 without tilting relative to the shaft 10. In this manner, the electrically driven storage type door mirror device 1 in the first embodiment can improve quality.

Yet furthermore, according to the electrically driven storage type door mirror device 1 in the first embodiment, the abutment face 43 that serves as an outer circumferential face of the insert portion 33 of the push nut 37 and the abutment face 44 that serves as an inner circumferential face of the opening preventing portion 42 is adapted to abut against each other in the radial direction of the shaft 10, and moreover, the inner circumferential face of the insert hole 39 of the cover 12 and the outer circumferential face of the shaft 10 have predetermined dimensions in the axial direction of the shaft 10. In addition, the inner circumferential face of the insert hole 39 of the cover 12 and the outer circumferential face of the shaft 10, the inner and outer circumferential faces being adapted to abut against each other in the radial direction of the shaft 10, have predetermined dimensions in the axial direction of the shaft 10. Therefore, according to the electrically driven storage type door mirror device 1 in the first embodiment, even if the mirror assembly 4 rotates for the sake of buffering and then the gear case 11 and the cover 12 (including the motor 13, the deceleration mechanism 14, the bearing member 16, the clutch gear 32, and the clutch holder 35) moves (rises) against the spring force of the spring 36, the abutment face 43 that serves as the outer circumferential face of the insert portion 33 of the push nut 37 and the abutment face 44 that serves as the inner circumferential face of the opening preventing portion 42 abut against each other in the radial direction of the shaft 10; and the inner circumferential face of the insert hole 39 of the cover 12 and the outer circumferential face of the shaft 10 abut against each other in the radial direction of the shaft 10. In other words, as shown in FIG. 10, even if the cover 12 rises as indicated by the dotted line, the abutment face 43 that serves as the outer circumferential face of the insert portion 33 of the push nut 37 and the abutment face 44 that serves as the inner circumferential face of the opening preventing portion 42 abut against each other in the radial direction of the shaft 10; by a dimension G in the axial direction of the shaft 10. and the inner circumferential face of the insert hole 39 of the cover 12 and the outer circumferential face of the shaft 10 abut against each other in the radial direction of the shaft 10 by a dimension H in the axial direction of the shaft 10. As a result, according to the electrically driven storage type door mirror device 1 in the first embodiment, even if the mirror assembly 4 rotates for the sake of buffering and then the gear case 11 and the cover 12 (including the motor 13, the deceleration mechanism 14, the bearing member 16, the clutch gear 32, and the clutch holder 35) move (rise) against the spring force of the spring 36, the door mirror device becomes capable of reliably preventing the elastic engagement portion 38 of the push nut 37 from opening from the inside to the outside in the radial direction of the shaft 10 from the engagement portion 25 of the shaft 10, by means of the opening preventing portion 42. In addition, by means of the insert hole 39, the mirror assembly 4 can rotate around the rotational center O-O of the shaft 10 without the cover 12 and the gear case 11 (a casing) tilting relative to the shaft 10.

### [Second Embodiment]

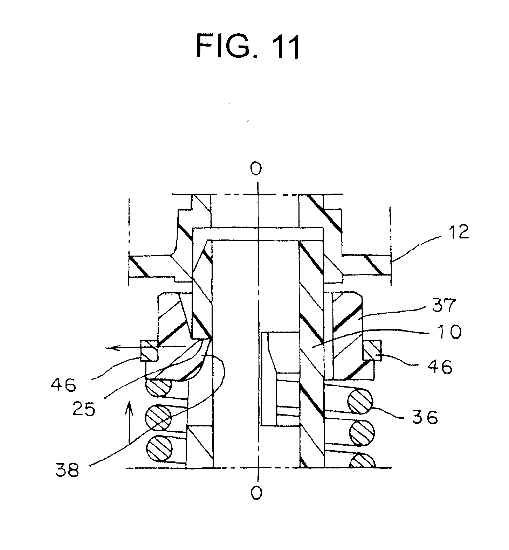

FIG. 11 shows a vehicle outside mirror device according to a second embodiment of the present invention. In the figure, like constituent elements in FIG 1 to FIG. 10 are designated by like reference numerals.

According to the vehicle outside mirror device in the second embodiment, an opening preventing portion 46 is made of a member which is independent of a cover 12, for example, a ring member.

The vehicle outside mirror device in the second embodiment becomes capable of reliably preventing an elastic engagement portion 38 of a push nut 37 from opening from the inside to the outside in a radial direction of a shaft 10 in the direction indicated by the solid arrow in FIG. 11 from an engagement portion 25 of the shaft 10, by means of an opening preventing portion 46 which is independent of a cover 12.

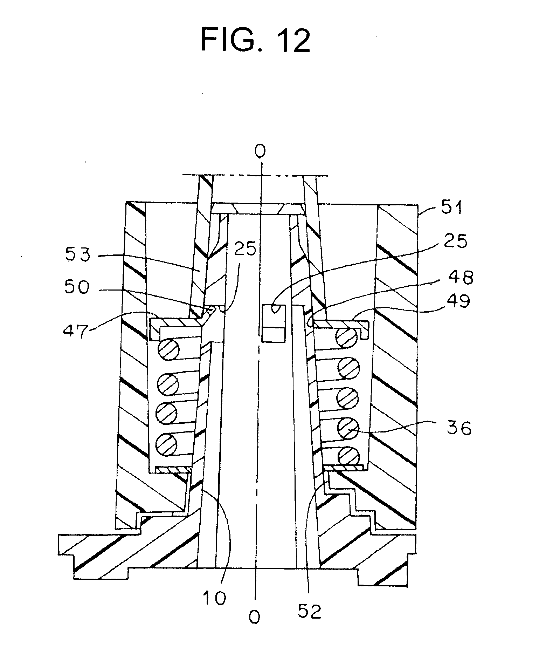

FIG. 12 shows a vehicle outside mirror device according to a third embodiment of the present invention. In the figure, like constituent elements in FIG. 1 to FIG. 11 are designated by like reference numerals.

According to the vehicle outside mirror device in the third embodiment, a stop is made of a metallic push nut 47. At the push nut 47, there are provided: a spring abutment portion 49 against which a spring 36 abuts, the abutment portion having an insert hole 48 through which a shaft 10 is inserted; and four elastic engagement portions 50 having a predetermined elasticity in the radial direction of the shaft 10, for elastically returning from the outside to the inside in the radial direction of the shaft 10 and then elastically engaging with four engagement portions 25 of the shaft 10.

In addition, the vehicle outside mirror device in the third embodiment is a manually driven storage type vehicle. Therefore, this device is provided with: a shaft 10, a spring 36; the push nut 47 that serves as a stop; and a mirror assembly 4, in place of an electrically drivable unit 3 according to the vehicle outside mirror device in the first embodiment (the electrically driven storage type door mirror device 1 in the first embodiment).

In a mirror housing 5 at the mirror assembly 4 side, a mount portion 51 comprised of a frame or a bracket which is independent of the mirror housing 5 is integrally fixed to the mirror housing 5. The mount portion 51 is formed in a hollow-like sectional recessed shape of which one end (an upper end) opens and the other end (a lower end) closes. A circular through hole 52 through which the shaft 10 is inserted is provided at a center of a lower end closed portion of the mount portion 51.

Further, the vehicle outside mirror device in the third embodiment is the one that is provided with an opening preventing portion 53 for preventing the elastic engagement portion 50 of the push nut 47 from opening from the inside to the outside in the radial direction of the shaft 10. The opening preventing portion 53 is integrally provided at the mirror housing 5 at the mirror assembly 4 side, or alternatively, a frame or a bracket.

According to the vehicle outside mirror device in the third embodiment, a metallic push nut 47 is used as a stop, and even the vehicle outside mirror device in the third embodiment can achieve advantageous effects which are substantially similar to those of the electrically driven storage type door mirror 1 in the first embodiment.

### (Description of Example Other Than First, Second, and Third Embodiments)

In the first, second, and third embodiments, described previously, an electrically driven storage type door mirror device or a manually driven storage type door mirror device has been described. However, the present invention can also be applied to a vehicle outside mirror deice other than such an electrically driven storage type door mirror or such a manually driven storage type door mirror. For example, the present invention can be applied to a vehicle outside mirror device such as a vehicle fender mirror device of electrically driven storage type or a fender mirror device of manually driven storage type.

## Claims

1. A vehicle outside mirror device (1) includes a mirror assembly (4) to be rotatably mounted on a vehicle body (D), said device (1) comprising:
a base (2) which is fixed to the vehicle body (D);
a shaft (10) which is fixed to the base (2);
a stop (37) which is attached to the shaft (10); and
a spring (36) which is disposed in a state in which the spring (36) is compressed at a periphery of the shaft (10) by means of the stop (37), wherein
the shaft (10) is provided an engagement portion (25);
the stop (37) is provided:
a spring abutment portion (34) against which the spring (36) abuts, the abutment portion (34) having an insert hole (40) through which the shaft (10) is inserted; and
an elastic engagement portion (38) having a predetermined elasticity in a radial direction of the shaft (10), the elastic engagement portion (38) being adapted to elastically return from an outside to an inside of the radial direction of the shaft (10) and then elastically engage with the engagement portion (25) of the shaft (10);
**characterized in that**,
the vehicle outside mirror device (1) comprising an opening preventing portion (42) which is independent of a stop (37) at which an elastic engagement portion (38) is formed, an inner-circumferential face (44) of the opening preventing portion (42) and an outer-circumferential face (43) of the elastic engagement portion (38) of the stop (37) abut against each other in a radial direction of a shaft (10) to thereby prevent the elastic engagement portion (38) of the stop (37) from opening from an inside to an outside in the radial direction of the shaft (10).

2. The vehicle outside mirror device (1) according to claim 1, wherein the opening preventing portion (42) is integrally provided at the mirror assembly (4) side.

3. The vehicle outside mirror device (1) according to claim 2, wherein
at the stop (37) and the opening preventing portion (42), abutment faces which are adapted to abut against each other in the radial direction of the shaft (10) are provided in an axial direction of the shaft (10), respectively.

4. The vehicle outside mirror device (1) according to claim 2, wherein
a stopper (45) for stopping the stop (37) from moving in the axial direction of the shaft (10), is provided at the opening preventing portion (42).

5. The vehicle outside mirror device (1) according to claim 1, **characterized in that** the opening preventing portion (42) is provided to be integrated with a cover (12) having a harness insert cylinder portion (26).

6. The vehicle outside mirror device (1) according to claim 1, **characterized in that** the opening preventing portion (42) is made of a ring member.

## Patentansprüche

1. Fahrzeug-Außenspiegelvorrichtung (1), die eine Spiegelanordnung (4) enthält, die drehbar an einer Fahrzeugkarosserie (D) angebracht wird, wobei die Vorrichtung (1) umfasst:
einen Sockel (2), der an der Fahrzeugkarosserie (D) befestigt ist;
eine Welle (10), die an dem Sockel (2) befestigt ist;
eine Sperre (37), die an der Welle (10) angebracht ist; und
eine Feder (36), die sich in einem Zustand befindet, in dem die Feder (36) durch die Sperre (37) an einem Umfang der Welle (10) zusammengedrückt wird, wobei die Welle (10) mit einem Eingriffsabschnitt (25) versehen ist;
die Sperre (37) versehen ist mit:
einem Feder-Anliegeabschnitt (34), an dem die Feder (36) anliegt, wobei der Anliegeabschnitt (34) ein Einführloch (40) aufweist, durch das die Welle (10) eingeführt wird; und
einem elastischen Eingriffsabschnitt (38), der eine vorgegebene Elastizität in einer radialen Richtung der Welle (10) aufweist, wobei der elastische Eingriffsabschnitt (38) so eingerichtet ist, dass er in der radialen Richtung der Welle (10) elastisch von einer Außenseite zu einer Innenseite rückfedert und dann elastisch mit dem Eingriffsabschnitt (25) der Welle (10) in Eingriff kommt;
**dadurch gekennzeichnet, dass**
die Fahrzeug-Außenspiegelvorrichtung (1) einen Öffnungsverhinderungsabschnitt (42) umfasst, der unabhängig von einer Sperre (37) ist, an der ein elastischer Eingriffsabschnitt (38) ausgebildet ist, wobei eine Innenumfangsfläche (44) des Öffnungsverhinderungsabschnitts (42) und eine Außenumfangsfläche (43) des elastischen Eingriffsabschnitts (38) der Sperre (37) in einer radialen Richtung einer Welle (10) aneinander anliegen, um so zu verhindern, dass sich der elastische Eingriffsabschnitt (38) der Sperre (37) in der radialen Richtung der Welle (10) von einer Innenseite zu einer Außenseite öffnet.

2. Fahrzeug-Außenspiegelvorrichtung (1) nach Anspruch 1, wobei der Öffnungsverhinderungsabschnitt (42) integral an der Seite der Spiegelanordnung (4) vorhanden ist.

3. Fahrzeug-Außenspiegelvorrichtung (1) nach Anspruch 2, wobei an der Sperre (37) und dem Öffnungsverhinderungsabschnitt (42) jeweils in einer axialen Richtung der Welle (10) Anlageflächen vorhanden sind, die so eingerichtet sind, dass sie in der radialen Richtung der Welle (10) aneinander anliegen.

4. Fahrzeug-Außenspiegelvorrichtung (1) nach Anspruch 2, wobei ein Anschlag (45), der die Sperre (37) bei Bewegung in der axialen Richtung der Welle (10) stoppt, an dem Öffnungsverhinderungsabschnitt (42) vorhanden ist.

5. Fahrzeug-Außenspiegelvorrichtung (1) nach Anspruch 1,
**dadurch gekennzeichnet, dass**
der Öffnungsverhinderungsabschnitt (42) integral mit einer Abdeckung (12) vorgesehen ist, die einen Kabelbaumeinführungs-Zylinderabschnitt (26) aufweist.

6. Fahrzeug-Außenspiegelvorrichtung (1) nach Anspruch 1,
**dadurch gekennzeichnet, dass**
der Öffnungsverhinderungsabschnitt (42) aus einem Ringelement besteht.

## Revendications

1. Dispositif de rétroviseur extérieur d'un véhicule (1) qui inclut un ensemble formant miroir (4) devant être monté avec une possibilité de rotation sur une carrosserie de véhicule (D), ledit dispositif (1) comprenant :
une base (2) qui est fixée sur la carrosserie du véhicule (D),
un axe (10) qui est fixé sur la base (2),
un arrêt (37) qui est fixé à l'axe (10), et
un ressort (36) qui est disposé dans un état dans lequel le ressort (36) est comprimé à la périphérie de l'axe (10) au moyen de l'arrêt (37), dans lequel
l'axe (10) est ménagé dans une partie de mise en prise (25),
l'arrêt (37) est équipé :
d'une partie formant butée de ressort (34) contre laquelle le ressort (36) vient en butée, la partie formant butée (34) comportant un alésage d'insertion (40) au travers duquel est inséré l'axe (10), et
d'une partie de mise en prise élastique (38) présentant une élasticité prédéterminée dans la direction radiale de l'axe (10), la partie de mise en prise élastique (38) étant conçue pour revenir élastiquement depuis l'extérieur vers l'intérieur de la direction radiale de l'axe (10) puis se mettre élastiquement en prise avec la partie de mise en prise (25) de l'axe (10),
**caractérisé en ce que**
le dispositif de rétroviseur extérieur du véhicule comprenant une partie empêchant toute ouverture (42) qui est indépendante d'un arrêt (37) au niveau duquel est formée une partie d'engagement élastique (38), une face circonférentielle interne (44) de la partie de prévention de l'ouverture (42) et une face circonférentielle externe (43) de la partie de mise en prise élastique (38) de l'arrêt (37) viennent en butée l'une contre l'autre dans la direction radiale de l'axe (10) pour empêcher de ce fait la partie de mise en prise élastique (38) de l'arrêt (37) de s'ouvrir depuis l'intérieur jusqu'à l'extérieur de la direction radiale de l'axe (10).

2. Dispositif de rétroviseur extérieur d'un véhicule (1) selon la revendication 1, dans lequel la partie de prévention de toute ouverture (42) est fournie de manière intégrée du côté de l'ensemble formant miroir (4).

3. Dispositif de rétroviseur extérieur d'un véhicule (1) selon la revendication 2, dans lequel
au niveau de l'arrêt (37) et de la partie de prévention de l'ouverture (42), sont respectivement prévues dans la direction axiale de l'axe (10). des faces de butée qui sont conçues pour venir en butée l'une contre l'autre dans la direction radiale de l'axe (10).

4. Dispositif de rétroviseur extérieur d'un véhicule (1) selon la revendication 2, dans lequel
un dispositif d'arrêt (45) destiné à empêcher l'arrêt (37) de se déplacer dans la direction axiale au niveau de l'axe (10) est prévu au niveau de la partie de prévention de l'ouverture (42).

5. Dispositif de rétroviseur extérieur d'un véhicule (1) selon la revendication 1, **caractérisé en ce que** la partie de prévention de l'ouverture (42) est prévue pour être intégrée avec un couvercle (12) comportant une partie cylindrique d'insert formant baudrier.

6. Dispositif de rétroviseur extérieur d'un véhicule (1) selon la revendication 1, **caractérisé en ce que** la partie de prévention de l'ouverture (42) est constituée d'un élément en forme d'anneau.
